# EUROPEAN PATENT APPLICATION

(11) **EP 1 271 879 A1**
(43) Date of publication of application: **02.01.2003**
(21) Application number: 01830431.1
(22) Date of filing: 28.06.2001
(51) Int. Cl.: H04L 29/06

(54) **Method of executing and interactive program in a network using a stateless protocol**

(71) Applicant: Cabel S.r.l., 50053 Empoli (IT)
(72) Inventor: Fani, Ivano, 50053 Empoli (IT)
(74) Representative: Pezzoli, Ennio

(57) **Abstract**

A method (300) of executing an interactive program in a network using a stateless protocol, the method including, for each input operation of the interactive program running on a server computer of the network, the steps of: a corresponding instance of a gateway program in a wait state on the server computer providing (308,342-344) a display structure for a client computer of the network in response to the input operation, the interactive program entering (340) a wait state for a reply to the input operation, terminating (350-352) execution of the gateway program and sending the display structure' to the client computer in response to the termination of execution, starting (356) execution of a next instance of the gateway program in response to an indication of the reply received from the client computer, resuming (364) operation of the interactive program in response to the reply provided by the gateway program, and the gateway program entering (366) a wait state for a next input operation.

## Description

The present invention relates to a method of executing an interactive program in a network using a stateless protocol.

Networks implementing distributed data processing systems, and in particular the INTERNET, have attained a widespread diffusion in the last years. The INTERNET is a global network connecting millions of computers with a decentralized design. The INTERNET has a client/server architecture, wherein a system of server computers supports shared resources; the other computers operate as clients that access the shared resources through the network.

Different types of protocols are used for exchanging information in the INTERNET. For example, a sub-system of the server computers (known as World Wide Web) uses the Hyper Text Transfer Protocol (HTTP), which supports documents (web pages) formatted in the Hyper Text Markup Language (HTML). The HTTP is intrinsically stateless because each command is executed independently, without any knowledge of the commands previously processed. This is due to the fact that the HTTP does not support persistent connections between a client computer and a server computer of the INTERNET. Therefore, each time a web page requested by the client computer is sent onto the INTERNET by the server computer, the corresponding connection disappears.

The HTTP also allows the client computer to interact dynamically with the server computer. A solution known as server-side consists in running programs that perform a specific task on the server computer in response to a corresponding request received from the client computer. These programs, such as the ones designed to accept and return data conforming to the Common Gateway Interface (CGI), are typically used for handling information requests (for example a database query) or for processing data entered into a web-based form. The CGI programs are not persistent. Therefore, each time a CGI program is executed, a new process is started; the CGI program disappears once it has fulfilled the corresponding request. This requires the CGI program to terminate its execution in order to return the web page with the result of the request to the client computer.

The protocols of the type described above are completely incompatible with most of the current programs. Particularly, interactive (or transaction) programs allowing users to enter data or commands and to receive output information continually cannot be used in the INTERNET.

As a consequence, each time the functions of an interactive program already available must be transferred to the INTERNET, it is necessary to design a completely new application having a different architecture that complies with the restraints of the protocol employed. Therefore, the investment in terms of human resources spent for writing the code and testing the interactive program is entirely lost. Moreover, a long period of time is generally required for attaining an acceptable level of reliability of the new application. This causes delays and high costs, and strongly limits the access to the INTERNET by structures with a consolidate software portfolio.

It is an object of the present invention to overcome the above-mentioned drawbacks. In order to achieve this object, a method of executing an interactive program in a network using a stateless protocol as set out in the first claim is proposed.

Briefly, the present invention provides a method of executing an interactive program in a network using a stateless protocol, the method including, for each input operation of the interactive program running on a server computer of the network, the steps of: a corresponding instance of a gateway program in a wait state on the server computer providing a display structure for a client computer of the network in response to the input operation, the interactive program entering a wait state for a reply to the input operation, terminating execution of the gateway program and sending the display structure to the client computer in response to the termination of execution, starting execution of a next instance of the gateway program in response to an indication of the reply received from the client computer, resuming operation of the interactive program in response to the reply provided by the gateway program, and the gateway program entering a wait state for a next input operation.

Moreover, the present invention also provides a computer program application for performing the method, a product storing the program application, and a corresponding system for executing the interactive program.

Further features and the advantages of the solution according to the present invention will be made clear by the following description of a preferred embodiment thereof, given purely by way of a non-restrictive indication, with reference to the attached figures, in which:
Fig.1 is basic block diagram of a network in which the method of the invention can be used;
Fig.2 shows a partial content of a working memory of a server computer of the network; and
Fig.3a-3c are a flow chart of a method used for executing an interactive program in the network.

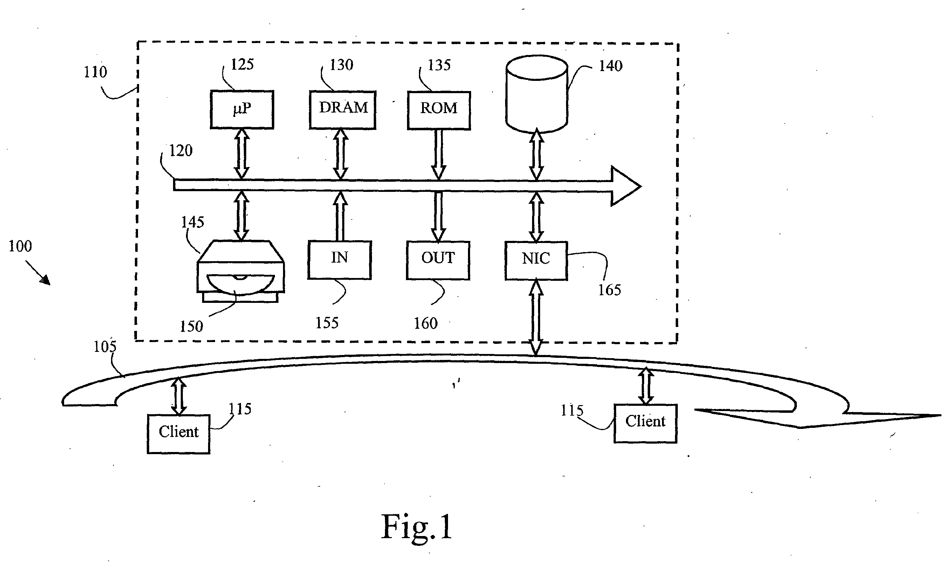

With reference in particular to Fig.1, there is shown a network 100, which consists in particular of the INTERNET. The INTERNET 100 includes multiple computers, which are connected to each other through a telecommunication structure 105. A system of server computers 110 (the World Wide Web) manages hypertext documents, known as web pages; each web page is formatted in the HTML, a language that supports links to other documents, as well as graphics, audio, and video files. Client computers 115 access the web through an application called browser. The web uses the HTTP protocol, which defines how messages are formatted and transmitted, and what actions the server computers and the client computers should take in response to various commands.

Each server computer 110 (for example consisting of a mini-computer) includes several units, which are connected in parallel to a communication bus 120. In particular, multiple microprocessors (µP) 125 control operation of the server computer 110, a working memory 130 (typically a DRAM) is used directly by the microprocessors 125, and a read-only memory (ROM) 135 stores a basic program for starting the server computer 110. Various peripheral units are further connected to the bus 120 (by means of respective interfaces). Particularly, a bulk memory consists of a hard-disk 140 and of a driver unit 145 for reading CD-ROMs 150; the server computer 110 further includes an input unit (IN) 155, which consists for example of a keyboard and a mouse, and an output unit (OUT) 160, which consists for example of a monitor. A network interface card (NIC) 165 is used to connect the server computer 110 to the telecommunication structure 105.

Similar considerations apply if a different stateless protocol is used, for example the File Transfer Protocol (FTP), if a different network is envisaged, such as an INTRANET, if the server computer has a different structure, for example with a single processor, if the server computer consists of a workstation or a mainframe, and the like.

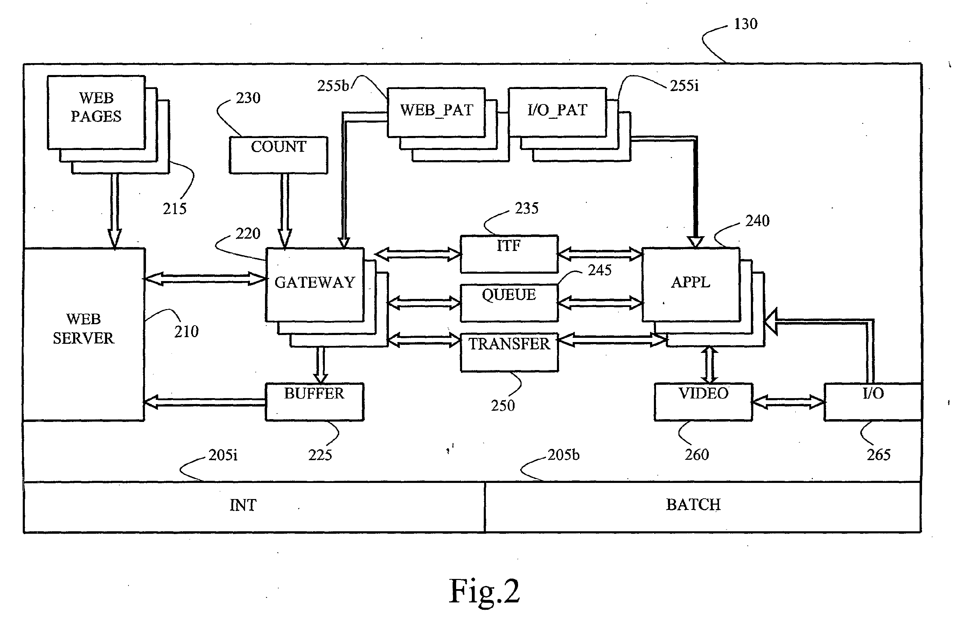

Considering now Fig.2, there is shown a partial content of the working memory 130 of the server computer; the information (programs and data) is typically stored on the hard-disk and loaded (at least partially) into the working memory 130 when the programs are running, together with other application programs (not shown in the figure). The programs are initially installed onto the hard disk of the server computer from CD-ROM.

The working memory 130 includes an operating system that provides basic services defining a software platform for the server computer, on top of which other programs can run; in particular, the operating system includes an interactive sub-system (INT) 205i and a batch sub-system (BATCH) 205b. The sub-systems 205i,205b define a respective operation environment for the programs, which exploits different resources either software or hardware. For example, a program invoked in an interactive operating mode uses resources allowing the program to respond to commands as soon as they are entered, for example modules for recognising input from the keyboard, for sending output to the monitor, for assigning a high-priority in a scheduling process. Conversely, a program invoked in a batch operating mode employs different resources that do not require interaction with a user and that allow the program to be executed whenever the server computer is substantially idle.

A web server module 210 processes a set of network protocol layers working together for defining communication over the INTERNET; the web server module 210 executes commands submitted by the client computers and delivers corresponding web pages to the client computers. The web server module 210 accesses a repository of web pages 215; each web page consists of a HTML document (either static or dynamic) that is fetched by the web server module 210 on request.

The web server module 210 communicates with one or more instances of a gateway program 220; the gateway program 220 is designed to accept and return data that conform to the CGI specification (and it is typically stored in the "/cgi-bin" directory of the hard-disk). An output buffer 225 is used for providing web pages built by the gateway program 220 to the web server module 210. The gateway program 220 receives an instance number from a counter (COUNT) 230. The instance number consists of a progressive value, which is set to a starting value (for example 0) during a bootstrap of the server computer and is incremented by 1 each time it is requested by the gateway program 220.

An interface program (ITF) 235 bridges between each instance of the gateway program 220 and a corresponding instance of an interactive program (APPL) 240. A multiple queue 245 is used to synchronise a correct interaction between corresponding instances of the gateway program 220 and of the interactive program 240. The multiple queue 245 is logically partitioned into a plurality of independent portions, each one storing records tagged with a respective instance number. The gateway program 220 and the interactive program 240 can execute either an instruction putting the program in a wait state on a corresponding portion of the multiple queue 245 (Read Data Queue) or an instruction signalling the other program in the wait state to resume its execution (Send Data Queue). A transfer buffer 250 is used for exchanging information between the gateway program 220 and the interactive program 240, which cooperate according to a producer/consumer protocol; particularly, the transfer buffer includes input/output records, each one tagged with a corresponding instance number.

The interactive program 240 accesses a repository of input/output record patterns (I/O_PAT) 255i; a repository of corresponding web patterns (WEB_PAT) 255b describing the structure and layout of the record patterns in static HTML is accessed by the gateway program 220. The interactive program 240 further accesses a video file 260, which is used to communicate with an input/output interface (I/O) 265. The input/output interface 265 controls interaction of users with the server computer, and in particular with the program 240.

Similar considerations apply if a whole application defined by the gateway program, the interface program and the interactive program is structured in a different manner, if different modules or functions are provided, if the web pages are replaced by equivalent display structures for the client computer, if the gateway program is stored in a different directory of the hard-disk, if the gateway program conforms to a different standard, such as the Server-Side Includes (SSI), if the gateway program and the interactive program are synchronised in a different manner (for example with exchange of messages), if the video file is replaced by an equivalent memory structure, and so on.

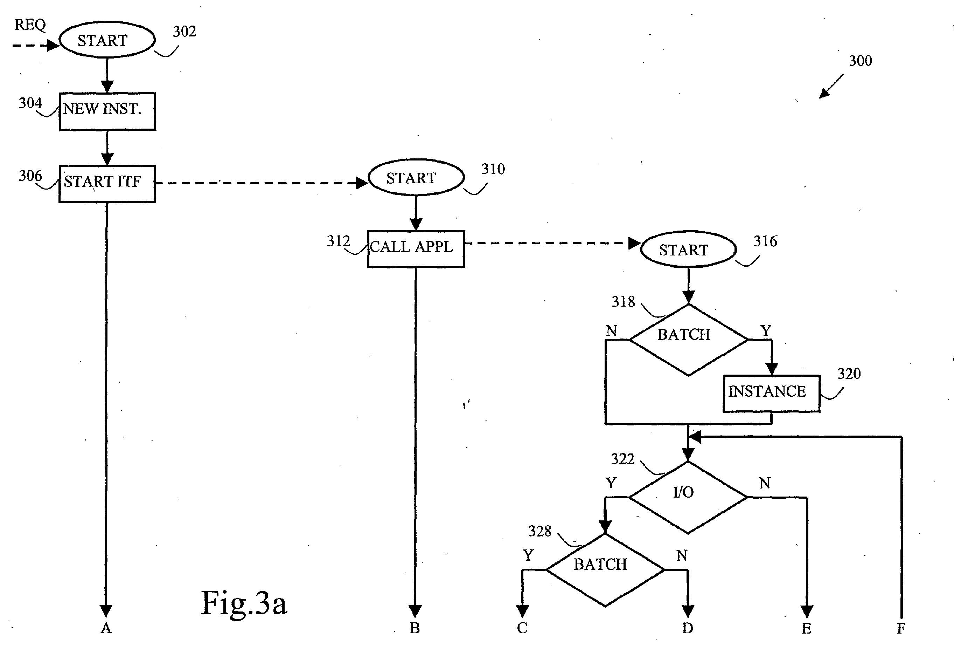

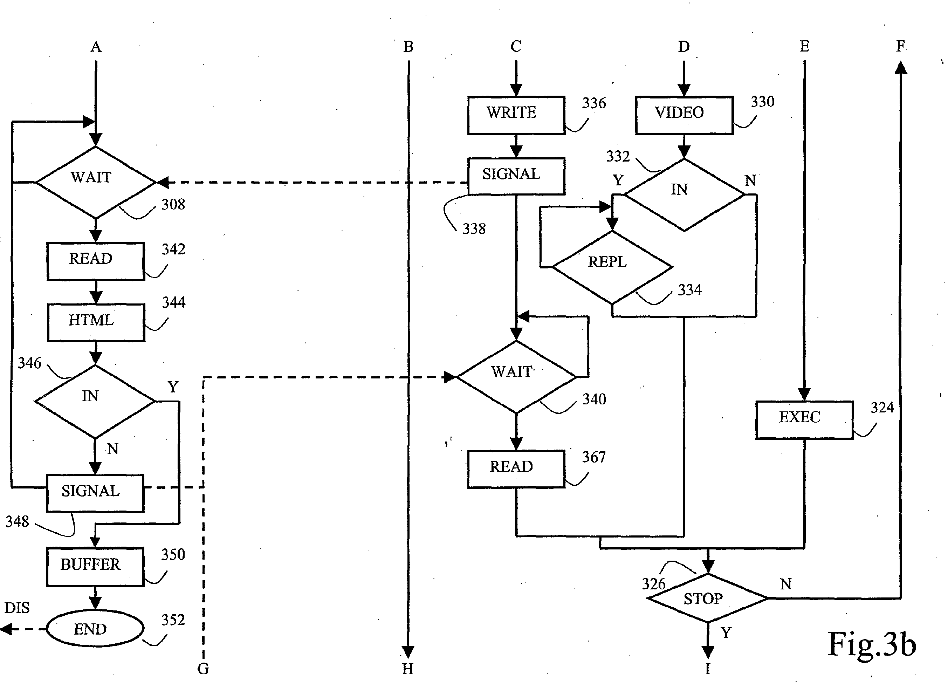

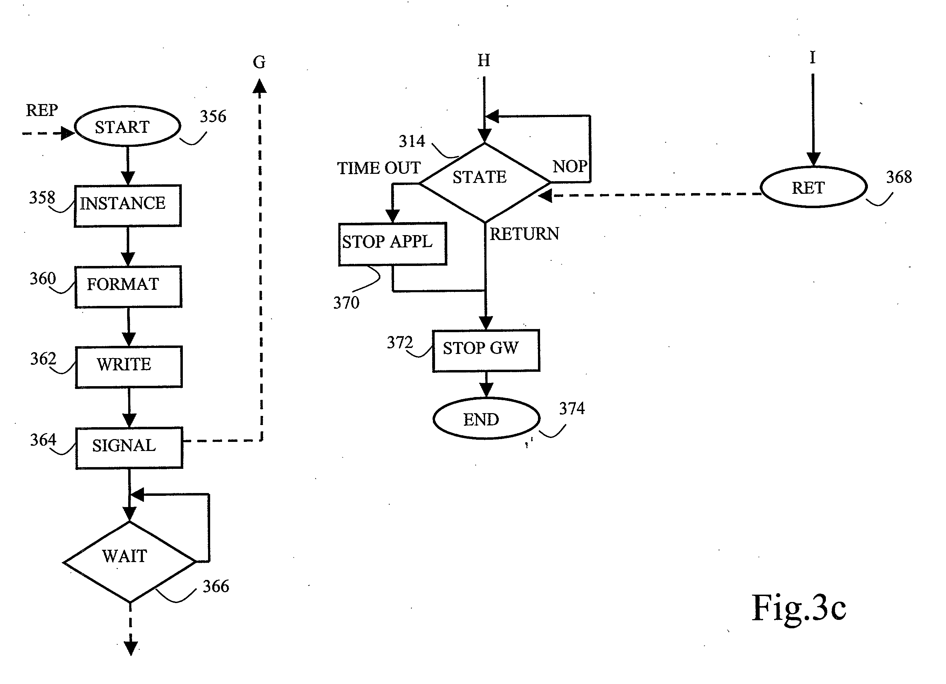

With reference now to Figg.3a-3c, each time the interactive program is executed in the INTERNET, a non-sequential process making up a method 300 is performed on the server computer. Particularly, a remote user requests execution of the interactive program by selecting a respective hot spot on a web page currently displayed on the client computer. The corresponding command submitted to the web server module causes a first instance of the gateway program to start at block 302.

The gateway program obtains a new instance number at block 304; the instance number (which is unique for a current session of the server computer) is used to identify the corresponding instance of the interactive program. Proceeding to block 306, the gateway program starts execution of the interface program (passing the instance number as parameter). The gateway program then enters a wait state at block 308 for a corresponding signal command from the interactive program on the respective portion of the multiple queue (identified by the instance number).

At the same time, the interface program starts at block 310 and hence passes to block 312, wherein it calls the interactive program (passing the instance number as parameter). The interface program then descends into block 314 (described in the following).

Concurrently, the interactive program begins execution at block 316, and then passes to block 318, wherein a check is made whether the interactive program has been invoked in the batch mode or in the interactive mode. If the interactive program has been started in the batch mode (by the gateway program), the instance number passed as parameter is acquired at block 320, and the method then passes to block 322; conversely, if the program has been started in the interactive mode by a local user, the method descends into block 322 directly.

Considering now block 322, the interactive program verifies whether an input/output instruction has been fetched. If not, the operation associated with the current instruction is performed at block 324; the method then proceeds to block 326 (described in the following). On the contrary, the method enters the test block 328. If the interactive program is running in the interactive mode, the method continues to block 330, wherein the input/output operation is carried out using the video file. Proceeding to block 332, the method checks whether the input/output operation involves a reading (input operation) or a writing (output operation). In the case of an input operation, the interactive program enters a wait state at block 334 for a corresponding reply from the local user. As soon as the reply (consisting of a string in the video file) is received, the method passes to block 326. Conversely, in the case of an output operation, the interactive program descends into block 326 directly.

If the interactive program is running in the batch mode (block 328), the method continues to block 336, wherein a corresponding input/output record is inserted into the transfer buffer; the input/output record is tagged with the instance number, and contains a string with the information to be displayed, the type of operation (input or output), and the name of the record pattern to be used. Proceeding to block 338, the interactive program sends a signal command for the gateway program in the wait state on the portion of the multiple queue identified by the instance number; the interactive program then enters a wait state at block 340 for a corresponding signal command from the gateway program.

The gateway program resumes its operation in response to the signal command at block 342, and extracts the input/output record tagged with the corresponding instance number from the transfer buffer. The gateway program fetches the web pattern corresponding to the record pattern specified in the input/output record at block 344; the other information passed in the input/output record by the interactive program is combined with the HTML tags and attributes, in order to update a corresponding web page under construction; the web page always includes the gateway program as associated action and the instance number in a shadow field. Continuing to block 346, the method checks whether the input/output operation involves a reading (input operation) or a writing (output operation). In the case of an output operation, the gateway program sends a signal command at block 348 for the interactive program in the wait state on the portion of the multiple queue identified by the instance number, and then returns to the wait state at block 308. Conversely, in the case of an input operation, the web page corresponding to the input/output operations received from the interactive program is inserted into the output buffer at block 350. The gateway program ends its execution at block 352, in order to cause this web page to be sent. to the client computer.

As soon as the remote user has submitted a reply to the web page by selecting a respective hot spot, the corresponding command submitted to the web server module (which includes the instance number and specifies the gateway program as associated action) causes a further instance of the gateway program to start at block 356. The gateway program acquires the instance number sent from the client computer at block 358. The gateway program then converts the data entered by the remote user into a string according to the format conforming to the video file at block 360. The method continues to block 362, wherein an input/output record tagged with the corresponding instance number and including this string is inserted into the transfer buffer. Proceeding to block 364, the gateway program sends a signal command for the interactive program in the wait state on the portion of the multiple queue identified by the instance number; the gateway program then enters a wait state at block 366 for a next input/output operation of the interactive program.

Referring back to block 340, the interactive program resumes its operation in response to the signal command provided by the gateway program at block 348 or 364. The interactive program then extracts the input/output record tagged with the corresponding instance number from the transfer buffer at block 367. Proceeding to block 326, the interactive program checks whether a last instruction has been reached. If not, the interactive program returns to block 322 for processing a next instruction. Conversely, the interactive program ends at block 368, returning the control to the interface program.

Considering now block 314, the interface program enters a wait-on-event state on the respective portion of the multiple queue. If a time-out on the portion of the multiple queue (identified by the instance number) occurs, a time-out event is reached; as a consequence, execution of the interactive program is immediately stopped at block 370, and the interface program then passes to block 372. If the control has been returned to the interface program from the interactive program regularly, the method descends into block 372 directly. Considering now block 372, the interface program causes the current instance of the gateway program to end its execution. The interface program then terminates at the final block 374.

Similar considerations apply if an equivalent method is performed, for example with error routines or escape functions for stopping execution of the interactive program by the remote user, if equivalent information is provided to the gateway program as an indication of each reply submitted by the remote user, and so on.

More generally, the present invention provides a method of executing an interactive program in a network using a stateless protocol. The method includes a series of steps for each input operation of the interactive program running on a server computer of the network. Particularly, a corresponding instance of a gateway program in a wait state on the server computer provides a display structure for a client computer of the network in response to the input operation; the interactive program then enters a wait state for a reply to the input operation. The gateway program terminates its execution and the display structure is sent to the client computer in response thereto. Execution of a next instance of the gateway program is started in response to an indication of the reply received from the client computer; the interactive program resumes its operation in response to the reply provided by the gateway program, and the gateway program enters a wait state for a next input operation.

The proposed solution allows any interactive program already available to be readily transferred to the INTERNET. This result is achieved in a manner that is almost completely transparent to the interactive program, which can be converted for operating in the INTERNET with a simple automatic procedure.

In fact, the gateway program takes care of the different protocols used by the interactive program and the INTERNET, so that the interactive program can be executed substantially as in its native environment.

The solution of the invention makes it possible to preserve the investment in terms of human resources spent for writing the code and testing the interactive program. Moreover, the functions of the interactive program may be made immediately available in the INTERNET, without any reliability concern.

With the method of the devised solution, even structures with a consolidate software portfolio may hang up their applications on the INTERNET in an inexpensive manner.

The preferred embodiment of the invention described above offers further advantages. Particularly, the interactive program enters a wait state either for an input instruction or for an output instruction. In this way, at most a single input/output record for each instance number is present in the transfer buffer at any time. Therefore, once an input/output record is extracted from the transfer buffer, the corresponding space may be immediately released; this space is available for other input/output records without any risk of processing the input/output records associated with each instance number in an incorrect order. This results in a considerable saving of space, with a negligible slow down of the execution speed.

Similar considerations apply if the input/output records have a different layout, or if the transfer buffer is replaced by an equivalent shared memory structure. Alternatively, the interactive program enters a wait state only when an input operation is encountered. In this case, the input/output records associated with the output operations are piled up in the transfer buffer; all the input/output records are then extracted by the gateway program only when an input operation occurs. In order to process the input/output records associated with each instance number in the correct order, an input/output record extracted from the transfer buffer is marked as invalid, but the corresponding space is not released (the transfer buffer is periodically emptied, for example at every bootstrap of the server computer).

The first instance of the gateway program caused to be executed by the remote user allows the whole process of the invention to be started in a very simple manner. Moreover, the instance number makes it possible to have multiple instances of the interactive program concurrently running on the server computer without any problem.

Similar considerations apply if the first instance of the gateway program is started in response to an equivalent request received from the client computer, if the instance number is generated in a different manner, if the instance number is replaced by an equivalent identifier, if the instance number is exchanged in a different manner between the gateway program and the interactive program, and the like. However, the solution of the invention leads itself to be carried out even starting execution of the interactive program in a different manner (for example directly by the remote user), or without using any instance number (with only a single instance of the interactive program active at any time).

The interface program provides a very simple manner of terminating the current instance of the gateway program when the interactive program reaches its end. In addition, the interface program allows both the gateway program and the interactive program to be terminated when the remote user does not respond within a pre-set time limit.

Similar considerations apply if the interface program has a different structure, if the time-out is detected in a different manner, and so on. Alternatively, no interface program is employed, for example modifying the interactive program for terminating execution of the current instance of the gateway program directly, with a time-out process embedded in the interactive program, or even without the possibility of managing any time-out condition.

Preferably, the interactive program is modified to be executable either in the batch mode (from the remote user) or in the interactive mode (from the local user). In this way, the same program may be used locally and in the INTERNET at the same time; moreover, when the interactive program is used in the INTERNET, only resources associated with the batch sub-system of the server computer (generally in excess) are exploited.

Similar considerations apply if the interactive program is executable in different operating modes, if the interactive program detects its operating mode in a different manner, and so on. However, the solution of the invention leads itself to be implemented even with the interactive program that can be executed only in a single operating mode (such as the interactive one or the batch one), and only in the INTERNET.

Advantageously, the solution according to the present invention is implemented with a computer program (software) application, which is provided on CD-ROM.

Alternatively, the programs of the application are provided on floppy-disk, are pre-loaded onto the hard-disk, or are stored on any other computer readable medium, are sent to the server computer through the INTERNET, are broadcast, or more generally are provided in any other form directly loadable into a working memory of the server computer. However, the method according to the present invention leads itself to be carried out even with a hardware structure, for example integrated in a chip of semiconductor material.

Naturally, in order to satisfy local and specific requirements, a person skilled in the art may apply to the solution described above many modifications and alterations all of which, however, are included within the scope of protection of the invention as defined by the following claims.

## Claims

1. A method (300) of executing an interactive program in a network using a stateless protocol, the method including, for each input operation of the interactive program running on a server computer of the network, the steps of:
a corresponding instance of a gateway program in a wait state on the server computer providing (308,342-344) a display structure for a client computer of the network in response to the input operation,
the interactive program entering (340) a wait state for a reply to the input operation,
terminating (350-352) execution of the gateway program and sending the display structure to the client computer in response to the termination of execution,
starting (356) execution of a next instance of the gateway program in response to an indication of the reply received from the client computer,
resuming (364) operation of the interactive program in response to the reply provided by the gateway program, and
the gateway program entering (366) a wait state for a next input operation.

2. The method (300) according to claim 1, further including, for each output operation of the interactive program, the steps of:
the interactive program inserting (336) a record corresponding to the output operation in a shared memory structure,
the interactive program entering (340) a wait state for processing of the record,
a corresponding instance of the gateway program in the wait state extracting (308,342) the record from the shared memory structure in response to the output operation,
the gateway program updating (344) the corresponding display structure according to the record,
the gateway program resuming (348) operation of the interactive program, and
the gateway program entering (308) a wait state for a next input or output operation.

3. The method (300) according to claim 2, further including the steps of:
starting (302) execution of a first instance of the gateway program in response to a request of execution of the interactive program received from the client computer,
starting (306,310,312,316) execution of a corresponding instance of the interactive program under the control of the gateway program, and
the gateway program entering (308) a wait state for a first input or output operation.

4. The method (300) according to claim 3, further including the steps of:
obtaining (304) an identifier uniquely associated with the corresponding instance of the interactive program by the first instance of the gateway program, and
providing (320) the identifier to the interactive program,
each display structure, each reply, and each record in the shared memory structure being associated with the corresponding identifier.

5. The method (300) according to claim 3 or 4, further including the steps of:
starting (306,310) execution of an interface program under the control of the first instance of the gateway program,
calling (312,316) the interactive program by the interface program,
returning (368) to the interface program upon termination of the interactive program,
terminating (372) a current instance of the gateway program by the interface program in response to the returning, and
terminating (374) execution of the interface program.

6. The method (300) according to claim 5, further including the steps of:
detecting (314) a time-out condition for the reply to the input operation,
terminating (370,372) execution of the interactive program and of the gateway program by the interface program in response to the time-out condition.

7. The method (300) according to any claim from 3 to 6, wherein the interactive program is executable either in a first operating mode or in a second operating mode, the first instance of the gateway program starting execution of the interactive program in the second operating mode, and wherein the interactive program performs each input or output operation using a video memory structure (330) if the interactive program has been started in the first operating mode or using the shared memory structure (336) if the interactive program has been started in the second operating mode.

8. A computer program application (220,235,240) directly loadable into a working memory (130) of a server computer of a network using a stateless protocol for performing the method of any claims from 1 to 7 when the program application is run on the server computer.

9. A program application product (150) comprising a computer readable medium on which the program application (220,235,240) of claim 8 is stored.

10. A system (100) for executing an interactive program (240) in a network using a stateless protocol, wherein the system includes a server computer (110) for running the interactive program and a gateway program (220), for each input operation of the interactive program the interactive program entering a wait state for a reply to the input operation, and a corresponding instance of a gateway program in a wait state providing a display structure (225) for a client computer (115) of the network in response to the input operation and terminating execution, and wherein the system further includes means (210) for sending the display structure to the client computer in response to the termination of execution and for receiving an indication of the reply from the client computer, a next instance of the gateway program starting execution in response to the indication of the reply received from the client computer, the interactive program resuming operation in response to the reply provided by the gateway program, and the gateway program entering a wait state for a next input operation.
